# EUROPÄISCHE PATENTSCHRIFT

(11) **EP 2 877 362 B1**
(45) Veröffentlichungstag und Bekanntmachung des Hinweises auf die Patenterteilung: **25.03.2020**
(21) Anmeldenummer: 13741717.6
(22) Anmeldetag: 22.07.2013
(51) Int. Cl.: B60K 37/06

(54) **BEDIENSCHNITTSTELLE, VERFAHREN ZUM ANZEIGEN EINER EINE BEDIENUNG EINER BEDIENSCHNITTSTELLE ERLEICHTERNDEN INFORMATION UND PROGRAMM**
OPERATING INTERFACE, METHOD FOR DISPLAYING INFORMATION FACILITATING OPERATION OF AN OPERATING INTERFACE AND PROGRAM
INTERFACE DE COMMANDE, PROCÉDÉ D'AFFICHAGE D'UNE INFORMATION FACILITANT L'UTILISATION D'UNE INTERFACE DE COMMANDE ET PROGRAMME

(30) Priorität: 27.07.2012 DE 102012014910
(43) Veröffentlichungstag der Anmeldung: 03.06.2015
(73) Patentinhaber: Volkswagen Aktiengesellschaft, 38440 Wolfsburg (DE)
(72) Erfinder: TANNEBERGER, Volkmar, 38527 Meine (DE); WENGELNIK, Heino, 38442 Wolfsburg (DE); MEDLER, Andreas, 38268 Lengede (DE); ALTHOFF, Frank, 31275 Lehrte (DE)
(86) Internationale Anmeldenummer: PCT/EP2013/065433
(87) Internationale Veröffentlichungsnummer: WO 2014/016256

(56) Entgegenhaltungen:
- WO-A1-2011/092746
- CN-A- 1 997 958
- DE-A1-102007 029 618
- DE-A1-102009 019 561
- US-A- 5 844 500
- US-A1- 2012 013 645

## Beschreibung

Die Erfindung bezieht sich auf eine Bedienschnittstelle, ein Verfahren zum Anzeigen einer eine Bedienung einer Bedienschnittstelle erleichternden Information und auf ein Programm, mit einem Programmcode zum Durchführen eines solchen Verfahrens. Diese können beispielsweise zur Bedienung eines Mehrfunktionssystems eines Kraftfahrzeugs oder zur Bedienung anderer elektrischer und elektronischer Systeme, beispielsweise Heimunterhaltungssystemen, zum Einsatz kommen.

In vielen Bereichen der Technik nimmt die Funktionsvielfalt elektrischer und elektronischer Komponenten stetig zu. Beispiele hierfür stellen Heimunterhaltungssysteme ebenso dar, wie Mehrfunktionssysteme, wie sie beispielsweise im Bereich von Kraftfahrzeugen zum Einsatz kommen. Solche Mehrfunktionssysteme können beispielsweise Funktionen eines Navigationssystems, eines Unterhaltungssystems, eines Systems zur Datenvernetzung sowie der Klimakomponenten des Fahrzeugs und anderer Fahrzeug spezifische Komponenten umfassen.

Um einem Benutzer dieser Systeme eine möglichst einfache und intuitive Bedienung derselben zu ermöglichen, werden heute häufig berührungsempfindliche Anzeigeelemente eingesetzt, die auch als Touchscreens bezeichnet werden. Auf diesen können kontextsensitiv Informationen dargestellt werden, die beispielsweise virtuelle Bedienelemente und andere Komponenten umfassen können, die der Benutzer durch ein Berühren derselben auswählen bzw. aktivieren kann.

Solche Multimediainformations- und Steuersysteme sind beispielsweise aus der EP 0 956 219 B1 und der DE 10 2009 059 867 A1 bekannt. Das zuletzt genannte Dokument beschreibet so beispielsweise ein Verfahren und eine Vorrichtung zum Bereitstellen einer grafischen Benutzerschnittstelle, die es ermöglicht, auf einer Anzeigefläche dargestellte Objekte mithilfe einer Geste zu bewegen.

Aber auch berührungslose Anzeige- und Bedienvorrichtungen werden im Rahmen eines Kraftfahrzeugs eingesetzt, über die eine entsprechende Auswahl möglich ist. So beschreibt beispielsweise die DE 10 2007 029 618 A1 eine berührungslos aktivierbare Anzeige- und Bedienvorrichtung, die in unterschiedlichen Betriebsmodi betreibbar ist.

Bei diesen und ähnlichen Systemen kann es nun jedoch dazu kommen, dass einem Benutzer eine Vielzahl unterschiedlicher Informationen gleichzeitig zur Verfügung gestellt wird. Neben virtuellen Bedienelementen, also beispielsweise virtuellen Knöpfen und virtuellen Schiebe- oder Drehreglern, werden hierbei häufig auch solche Informationen angezeigt, die gerade keine Interaktion mit dem Benutzer ermöglichen. Zu diesen können beispielsweise Hintergrunde aber ebenso beispielsweise Kartendarstellungen und andere Informationen und Objekte zählen.

Mit einer steigenden Zahl der zur Verfügung stehenden Funktionen eines solchen Systems kann so eine Bedienung desselben den Benutzer gegebenenfalls vor größere Herausforderungen stellen. Diese können gegebenenfalls verschärft werden, wenn das betreffende System in einem Umfeld eingesetzt wird, in dem die Aufmerksamkeit des Benutzers diesem nicht uneingeschränkt zur Verfügung steht. Im Falle eines Kraftfahrzeugs kann dies beispielsweise dann der Fall sein, wenn es sich bei dem Benutzer um den Fahrer des Kraftfahrzeugs handelt und dieser während der Fahrt gleichzeitig auf die Umgebung und die Verkehrssituation achten muss.

Die Druckschrift WO/092746 A1, bzw. US 2012/235947 A1, offenbart ein Konzept zur Bedienung einer Landkarte, wobei verschiedene Gestiken vor einem Display erfasst werden und die Landkarte basierend auf den Gestiken skaliert bzw. verschoben wird. Das Dokument DE 10 2009 019 561 A1 beschreibt ein Konzept, das an einem Display zwischen einem Anzeigemodus und einem Bedienmodus hin- und herschaltet in Abhängigkeit einer Annäherung eines Objektes in einer Bedienzone vor dem Display.

Das Dokument US 2012/0013645 A1 beschreibt ein Anzeigesystem, bei dem ein Symbol vor einem Hintergrundbild angezeigt wird. Das Symbol wird bei Annäherung in seiner Größe angepasst. Die Druckschrift CN 1 997 958 A beschreibt eine grafische Benutzeroberfläche für ein Display, das eine 3D-Abtastung verwendet. Wenn sich der Finger eines Benutzers in einer bestimmten Entfernung von dem Bildschirm befindet, wird beispielsweise ein Menü eingeblendet.

Es besteht daher ein Bedarf daran, eine Bedienung eines solchen Systems einfacher und intuitiver zu gestalten.

Diesem Bedarf tragen eine Bedienschnittstelle gemäß Patentanspruch 1, ein Verfahren zum Anzeigen einer eine Bedienung einer Bedienschnittstelle erleichternden Information gemäß Patentanspruch 13 und ein Programm mit einem Programmcode zum Durchführen eines solchen Verfahrens gemäß Patentanspruch 15 Rechnung.

Ein Ausführungsbeispiel einer Bedienschnittstelle umfasst ein berührungsempfindliches Anzeigeelement und wenigstens einen Sensor, die ausgebildet sind, um auf dem Anzeigeelement eine Information einem Benutzer anzuzeigen, um eine Berührung des Anzeigeelements mit einem Berührelement durch den Benutzer zu registrieren und um eine Gegenwart des Berührelements in einem Erkennungsbereich zu registrieren, wobei sich der Erkennungsbereich an eine dem Benutzer zugewandte Seite des Anzeigeelements anschließt. Die Bedienschnittstelle umfasst ferner eine Steuerschaltung, die ausgebildet ist, um das Anzeigeelement derart anzusteuern, dass dieses eine eine Bedienung der Bedienschnittstelle erleichternde Information auf dem Anzeigeelement wiedergibt, wenn sich das Berührelement während einer vorbestimmten Zeitspanne in dem Erkennungsbereich befindet, ohne dass währenddessen eine Berührung des Anzeigeelements registriert wurde.

Ein Verfahren gemäß einem Ausführungsbeispiel zum Anzeigen einer eine Bedienung einer Bedienschnittstelle erleichternden Information umfasst ein Anzeigen einer Information auf einem berührungsempfindlichen Anzeigeelement der Bedienschnittstelle, ein Registrieren einer Gegenwart eines Berührelements in einem Erkennungsbereich, wobei sich der Erkennungsbereich an eine dem Benutzer zugewandte Seite des Anzeigeelements anschließt, und ein Wiedergeben der die Bedienung der Bedienschnittstelle erleichternden Information, wenn sich das Berührelement während einer vorbestimmten Zeitspanne in dem Erkennungsbereich befindet, ohne dass währenddessen eine Berührung des Anzeigeelements registriert wurde.

Ebenso umfassen Ausführungsbeispiele ein Programm mit einem Programmcode zum Durchführen eines solchen Verfahrens gemäß einem Ausführungsbeispiel, wenn der Programmcode auf einem Computer, einem Prozessor oder einer programmierbaren Hardwarekomponente ausgeführt wird. Bei einer solchen programmierbaren Hardwarekomponente kann es sich beispielsweise auch um ein Steuergerät und ein anderes Hardware-basiertes System eines Kraftfahrzeugs handeln.

Ausführungsbeispielen liegt so die Erkenntnis zugrunde, dass die Bedienung eines Systems, welches ein Ausführungsbeispiel umsetzt, dadurch erleichtert und intuitiver gestaltet werden kann, dass dieses eine die Bedienung der Bedienschnittstelle erleichternden Information wiedergibt, wenn sich das Berührelement, mit dessen Hilfe die Bedienung des berührungsempfindlichen Anzeigeelements erfolgt, in dem Erkennungsbereich über die vorbestimmte Zeitspanne hinweg befindet, ohne dass es währenddessen zu einer Berührung des Anzeigeelements gekommen ist. In einer solchen Situation kann beispielsweise davon ausgegangen werden, dass der Benutzer auf dem berührungsempfindlichen Anzeigeelement eine Information, ein virtuelles Bedienelement oder ein anderes Objekt sucht und nicht findet, welches er dort eigentlich erwartet. In einem solchen Fall kann so die Aufmerksamkeit des Benutzers auf die zur Verfügung stehenden Möglichkeiten und Optionen durch das entsprechende Einblenden der die Bedienung erleichternden Information gelenkt werden, wodurch die Bedienung der Bedienschnittstelle gegebenenfalls vereinfacht und intuitiver ausgestaltet werden kann.

Handelt es sich darüber hinaus um eine im Rahmen eines Kraftfahrzeugs implementierte Bedienschnittstelle, kann es aufgrund der Erleichterung bei der Bedienung zu einer geringeren Ablenkung des gegebenenfalls auch als Fahrer fungierenden Benutzers kommen. Hierdurch kann so gegebenenfalls eine Verkehrssicherheit gesteigert werden.

Der Erkennungsbereich stellt hierbei ein Volumen dar, welches sich beispielsweise unmittelbar an die dem Benutzer zugewandte Seite des Anzeigeelements anschließen kann. Der Erkennungsbereich stellt somit nicht etwa einen Teilbereich des Anzeigeelements mit einer entsprechenden Anzeigefläche dar, sondern erstreckt sich vielmehr senkrecht zu dieser in einen Raumbereich hinein, durch den das Berührelement des Benutzers bewegt wird, um das Anzeigeelement zu berühren, um so eine entsprechende Aktion auszulösen oder durchzuführen.

Die Steuerschaltung kann so ausgebildet sein, um eine Zeitdauer zu erfassen, während der sich das Berührelement in dem Erkennungsbereich befindet. Auf Basis der so bestimmten Zeitdauer kann dieses dann überprüfen, ob die erfasste Zeitdauer mit der vorbestimmten Zeitspanne übereinstimmt bzw. diese übersteigt. Ist dies der Fall, kann die Steuerschaltung die die Bedienung der Bedienschnittstelle erleichternde Information auf dem Anzeigeelement wiedergeben.

Zur Ansteuerung des berührungsempfindlichen Anzeigeelements kann hierbei die Steuerschaltung mit dem berührungsempfindlichen Anzeigeelement informationstechnisch gekoppelt sein. Die Steuerschaltung und das berührungsempfindliche Anzeigeelement können so über den Austausch von Informationsumfassenden oder informationstragenden Signalen miteinander in Kommunikation treten. Die Steuerschaltung kann hierbei beispielsweise Steuersignale an das Anzeigeelement übertragen, während das berührungsempfindliche Anzeigeelement und gegebenenfalls der wenigstens eine Sensor entsprechende Erfassungs- oder Sensorsignale an die Steuerschaltung übermitteln können.

Informationstragende Signale können so beispielsweise mittels elektrischer, optischer oder anderer Signale sowie einer Kombination derselben übertragen werden. Sie können mithilfe individueller Leitungen, jedoch auch mithilfe von Bussystemen oder einer Kombination beider zwischen den entsprechenden Komponenten ausgetauscht werden. Die Informations-tragenden Signale können hierbei sowohl hinsichtlich ihrer Signalstärke wie auch hinsichtlich ihres zeitlichen Verlaufs kontinuierlich oder diskret ausgestaltet sein. Die Signale können so beispielsweise analoge Signale, jedoch auch digitale Signale darstellen.

Optional können das berührungsempfindliche Anzeigeelement und der wenigstens eine Sensor derart ausgebildet sein, sodass der Erkennungsbereich das berührungsempfindliche Anzeigeelement im Wesentlichen derart vollständig einschließt, sodass das Berührelement den Erkennungsbereich passieren muss, wenn der Benutzer das Berührelement zu dem berührungsempfindlichen Anzeigeelement bewegt. Hierdurch kann die Bedienung des Systems gegebenenfalls weiter vereinfacht und intuitiver ausgestaltet werden, da so es gegebenenfalls möglich ist zu verhindern, dass das Berührelement zu dem Anzeigeelement geführt werden kann, ohne dass die Steuerschaltung ein Verweilen des Berührelements vor dem Anzeigeelement nicht registriert. So kann die Bediensicherheit der Bedienschnittstelle im Hinblick auf die Erkennung des Verweilens des Berührelements verbessert, seine Reaktionen zuverlässiger gestaltet und damit die Bedienung des Systems vereinfacht und intuitiver gestaltet werden.

Optional kann bei einer Bedienschnittstelle gemäß einem Ausführungsbeispiel die Steuerschaltung so ausgebildet sein, dass die vorbestimmte Zeitspanne wenigstens 3 s beträgt. Bei anderen Ausführungsbeispielen kann die vorbestimmte Zeitspanne wenigstens 5 s, wenigstens 8 s, wenigstens 10 s oder wenigstens 15 s betragen. Hierdurch kann es möglich sein, die Bedienung eines solchen Systems weiter zu vereinfachen und intuitiver auszugestalten, indem einerseits ein zügiges Bewegen des Berührelements durch den Erkennungsbereich nicht zu einem Anzeigen der die Bedienung erleichternden Informationen führt, andererseits jedoch ein nicht zu langes Verweilen in dem Erkennungsbereich erforderlich ist, um diese dem Benutzer anzuzeigen.

Optional kann bei einer Bedienschnittstelle gemäß einem Ausführungsbeispiel die Steuerschaltung derart ausgebildet sein, dass die vorbestimmte Zeitspanne von einer Bewegung des Berührelements in dem oder durch den Erkennungsbereich unabhängig ist. So kann das Einblenden der die Bedienung erleichternden Informationen zuverlässiger erfolgen, was wiederum zu einer einfacheren und intuitiveren Bedienung des Systems führen kann. So kann gerade bei einem Ausführungsbeispiel einer Bedienschnittstelle die Art und Weise, wie sich das Berührelement in dem Erkennungsbereich bewegt, bei der Frage unberücksichtigt bleiben, ob die die Bedienung erleichternde Informationen auf dem Anzeigeelement dargestellt werden oder nicht. Dies kann beispielsweise dann sinnvoll sein, wenn eine Bewegung des Berührelements aufgrund von auf dieses einwirkender Kräfte gegebenenfalls gestört, zumindest jedoch beeinflusst wird. Dies kann beispielsweise im Kraftfahrzeugbereich auftreten, wenn das Berührelement durch eine Bewegung des Kraftfahrzeugs, die der Benutzer nicht oder nicht vollständig kompensieren kann, bewegt wird.

Optional kann bei einer Bedienschnittstelle gemäß einem Ausführungsbeispiel die Steuerschaltung ausgebildet sein, um das Anzeigeelement derart anzusteuern, dass die Wiedergabe der die Bedienung erleichternden Information ein optisches Hervorheben wenigstens eines auf dem Anzeigeelement dargestellten virtuellen Bedienelements umfasst. Ein solches virtuelles Bedienelement kann beispielsweise eine virtuelle Schaltfläche, einen virtuellen Schalter, einen virtuellen Knopf, einen virtuellen Schieberegler, einen virtuellen Drehregler, ein virtuelles Erfassungsfeld, einen virtuellen zweidimensionalen Schalter oder ein anderes virtuelles entsprechendes Bedienelement umfassen. Je nach konkreter Ausgestaltung kann hierbei beispielsweise ein Rand des wenigstens einen virtuellen Bedienelements mit dickeren und/oder farblich hervorgehobenen Strichen erfolgen. Alternativ oder ergänzend hierzu kann das wenigstens eine virtuelle Bedienelement auch farblich hervorgehoben angezeigt werden. Ebenso alternativ oder ergänzend kann dieses vergrößert dargestellt werden. Ebenso kann ergänzend oder alternativ kann das wenigstens eine virtuelle Bedienelement in einer dreidimensionalen oder einer verstärkten dreidimensionalen Darstellung wiedergegeben werden. Auch kann ergänzend oder alternativ das wenigstens eine virtuelle Bedienelement pulsierend und/oder mit einer seinen Rand wenigstens teilweise oder vollständig umgebenden Leuchterscheinung dargestellt werden.

Optional kann darüber hinaus die Steuerschaltung einer Bedienschnittstelle gemäß einem Ausführungsbeispiel so ausgebildet sein, um das Anzeigeelement derart anzusteuern, sodass die Wiedergabe der die Bedienung erleichternden Information eine Darstellung eines Hilfsmenüs und/oder einer Hilfsanzeige umfasst. Je nach konkreter Anwendungssituation kann so eine Aufmerksamkeit des Benutzers auf wenigstens ein virtuelles Bedienelement gelenkt werden oder durch das Einblenden eines Hilfsmenüs bzw. einer entsprechenden Hilfsanzeige eine Leitung des Benutzers ermöglicht werden. Hierdurch kann - unabhängig von der jeweils implementierten Wiedergabe der die Bedienung erleichternden Information - die Bedienung eines Systems, dem die Bedienschnittstelle gemäß einem Ausführungsbeispiel zugrunde liegt, vereinfacht und intuitiver gestaltet werden.

Optional kann bei einer Bedienschnittstelle gemäß einem Ausführungsbeispiel die Steuerschaltung ausgebildet sein, um die Wiedergabe der die Bedienung der Bedienschnittstelle erleichternden Information abschaltbar zu machen. Hierdurch kann es gegebenenfalls möglich sein, eine Akzeptanz des Benutzers dieses Systems zu steigern, da diese Einfluss auf die Situationen nehmen kann, bei denen die entsprechende die Bedienung erleichternde Information dargestellt wird. Diese kann beispielsweise kontextsensitiv erfolgen. Somit kann auch durch diese Maßnahme ergänzend oder alternativ die Bedienung eines entsprechenden Systems gegebenenfalls vereinfacht und intuitiver ausgestaltet werden.

Optional können bei einer Bedienschnittstelle gemäß einem Ausführungsbeispiel das berührungsempfindliche Anzeigeelement und der wenigstens eine Sensor ferner so ausgebildet sein, um eine Gegenwart des Berührelements in einem weiteren Erkennungsbereich und dem Erkennungsbereich zu registrieren, wobei sich der weitere Erkennungsbereich an einer dem Benutzer zugewandten Seite an den Erkennungsbereich anschließt. In einem solchen Fall kann die Steuerschaltung ferner ausgebildet sein, um das Anzeigeelement derart anzusteuern, dass dieses eine weitere die Bedienung der Bedienschnittstelle erleichternde Information wiedergibt, wenn sich das Berührelement während einer weiteren vorbestimmten Zeitspanne in dem weiteren Erkennungsbereich und/oder in dem Erkennungsbereich befindet, ohne dass während dieser Zeitspanne eine Berührung des Anzeigeelements registriert wurde. Der Erkennungsbereich und der weitere Erkennungsbereich können so beispielsweise einen gemeinsamen Überprüfungsbereich bilden.

Anders ausgedrückt kann das Steuergerät so ausgebildet sein, um auf dem Anzeigeelement eine Darstellung von auf diesem wiedergegebenen Informationen zu ändern. Hierdurch kann es gegebenenfalls möglich sein, durch diese Veränderung bereits dann eine Lenkung des Benutzers zu bewirken, wenn sich das Berührelement in dem sich an den Erkennungsbereich anschließenden weiteren Erkennungsbereich befindet, ohne dass während der weiteren vorbestimmten Zeitspanne eine Berührung des Anzeigeelements registriert wird. Auch hierdurch kann so gegebenenfalls die Bedienung eines Systems, dem die Bedienschnittstelle zugrunde liegt, einfacher und intuitiver durchgeführt werden, in dem die geänderte Darstellung beispielsweise weniger markant als die zuvor beschriebene, die Bedienung erleichternde Information ist. Es kann so eine zweistufige Einblendung entsprechender Informationen implementiert werden. Auch kann hierdurch gegebenenfalls eine Akzeptanz einer solchen Bedienschnittstelle gemäß einem Ausführungsbeispiel durch den Benutzer gesteigert werden.

Optional kann die Steuerschaltung hierbei auch derart ausgebildet sein, um nur den weiteren Erkennungsbereich im Zusammenhang mit der weiteren vorbestimmten Zeitspanne auf eine Gegenwart des Berührelements hin zu prüfen. Eine Überprüfung des Erkennungsbereichs kann so gegebenenfalls entfallen. In diesem Fall kann der oben genannte Überprüfungsbereich auch nur den weiteren Erkennungsbereich, der sich an den Erkennungsbereich anschließt, umfassen.

Der weitere Erkennungsbereich kann sich hierbei optional unmittelbar an den Erkennungsbereich anschließen. Ebenso kann optional bei einer solchen Bedienschnittstelle die Steuerschaltung wiederum ausgebildet sein, um die Zeitdauer zu erfassen, während der sich das Berührelement in dem weiteren Erkennungsbereich befindet. Ebenso kann bei der Prüfung der Gegenwart des Berührelements in dem weiteren Erkennungsbereich im Zusammenhang mit der vorbestimmten weiteren Zeitspanne der Erkennungsbereich unberücksichtigt bleiben, sodass die Steuerschaltung nur dann das Anzeigeelement derart ansteuert, sodass dieses die weitere die Bedienung der Bedienschnittstelle erleichternde Information wiedergibt, wenn sich das Berührelement während der weiteren vorbestimmten Zeitspanne in dem weiteren Erkennungsbereich befindet, ohne dass während dieser Zeitspanne eine Berührung des Anzeigeelements registriert wurde.

Optional können bei einer Bedienschnittstelle gemäß einem Ausführungsbeispiel, das berührungsempfindliche Anzeigeelement und der wenigstens eine Sensor derart ausgebildet sein, sodass der weitere Erkennungsbereich den Erkennungsbereich im Wesentlichen derart vollständig einschließt, sodass das Berührelement den weiteren Erkennungsbereich passieren muss, wenn der Benutzer das Berührelement in den Erkennungsbereich bewegt. Auch hierdurch kann so ein zuverlässigeres Ansprechen einer Bedienschnittstelle im Hinblick auf den weiteren Erkennungsbereich ermöglicht werden, da ein Vorbeiführen des Bedienelements an dem weiteren Erkennungsbereich so im Wesentlichen nicht möglich ist. So kann auch hierdurch die Bedienung des Systems gegebenenfalls vereinfacht und intuitiver ausgestaltet werden.

Wie bereits im Zusammenhang mit dem Erkennungsbereich erläutert wurde, kann optional bei einer Bedienschnittstelle gemäß einem Ausführungsbeispiel die Steuerschaltung auch hier wiederum so ausgebildet sein, dass die weitere vorbestimmte Zeitspanne wenigstens 3 s, bei anderen Ausführungsbeispielen wenigstens 5 s, wenigstens 8 s, wenigstens 10 s oder wenigstens 15 s beträgt. Auch hierdurch kann die Bedienung eines entsprechenden Systems gegebenenfalls vereinfacht und intuitiver ausgestaltet werden, da erst nach Verstreichen der weiteren vorbestimmten Zeitspanne die Darstellung auf dem Anzeigeelement entsprechend geändert und die weitere Information wiedergegeben wird. Eine Ablenkung des Benutzers kann somit gegebenenfalls vermieden werden. Alternativ oder ergänzend kann so gegebenenfalls auch ein Empfinden des Benutzers vermieden werden, dass dieser durch die geänderte Darstellung und damit gegebenenfalls gestört wird. Somit kann hierdurch erneut eine Akzeptanz einer solchen Bedienschnittstelle gegebenenfalls gesteigert werden, wodurch die Bedienung des Systems im Bedarfsfall dennoch vereinfacht und intuitiver ausgestaltet werden kann. Die vorbestimmte Zeitspanne und die weitere vorbestimmte Zeitspanne können hierbei optional identisch bemessen, jedoch auch unterschiedlich lang sein. Hierdurch kann es gegebenenfalls möglich sein, eine Implementierung zu vereinfachen oder aber auch in Abhängigkeit von einem Abstand des Berührelements 150 von dem Anzeigeelement 110 eine entsprechende Zeitdauer anzupassen, ab wann die weitere Information bzw. eine entsprechende die Bedienung erleichternde Information wiedergegeben wird. Eine separate Implementierung der weiteren vorbestimmten Zeitspanne kann hierbei gegebenenfalls auch entfallen.

Wie bereits im Zusammenhang mit dem Erkennungsbereich erläutert wurde, kann optional bei einer Bedienschnittstelle gemäß einem Ausführungsbeispiel die Steuerschaltung auch derart ausgebildet sein, sodass die weitere vorbestimmte Zeitspanne von einer Bewegung des Berührelements in dem oder durch den weiteren Erkennungsbereich unabhängig ist. Auch hierdurch kann eine Bedienung des Systems gegebenenfalls einfacher und intuitiver ausgestaltet werden, da Bewegungen des Berührelements, welche durch eine ungewollte Bewegung des Berührelements hervorgerufen werden, gegebenenfalls nicht weiter berücksichtigt werden.

Optional kann bei einer Bedienschnittstelle gemäß einem Ausführungsbeispiel die Steuerschaltung ausgebildet sein, um das Anzeigeelement derart anzusteuern, dass die Wiedergabe der weiteren die Bedienung der Bedienschnittstelle erleichternden Information ein dezentes Hervorheben wenigstens eines auf dem Anzeigeelement dargestellten virtuellen Bedienelements umfasst. Auch dieses dezente Hervorheben kann beispielsweise durch eine der bereits zuvor genannten Optionen erfolgen. Alternativ oder ergänzend hierzu kann die Steuerschaltung auch derart ausgebildet sein, sodass diese das Anzeigeelement derart ansteuert, dass die Wiedergabe der weiteren die Bedienung der Bedienschnittstelle erleichternden Information eine Darstellung eines Hilfsmenüs und/oder einer Hilfsanzeige umfasst. Optional kann es sich hierbei um das bereits oben erwähnte Hilfsmenü bzw. die oben erwähnte Hilfsanzeige handeln. Es kann jedoch auch ein abweichendes weiteres Hilfsmenü oder eine abweichende weitere Hilfsanzeige sein. Auch hierdurch kann so eine gegebenenfalls kontextsensitive Lenkung des Benutzers ermöglicht werden, wodurch die Bedienung des Systems sich gegebenenfalls vereinfacht und intuitiver wird.

Optional kann bei einer Bedienschnittstelle gemäß einem Ausführungsbeispiel das berührungsempfindliche Anzeigeelement und der wenigstens eine Sensor derart ausgebildet sein, sodass das Berührelement wenigstens einen Teil eines Fingers und/oder wenigstens einen Teil einer Hand umfasst. Hierdurch kann die Bedienung des Systems gegebenenfalls weiter vereinfacht und intuitiver ausgestaltet werden, indem ein unmittelbares Berühren des Anzeigeelements durch den Benutzer möglich wird.

Ein Verfahren zum Anzeigen einer eine Bedienung einer Bedienschnittstelle erleichternden Information kann optional ferner ein Erfassen einer Zeitdauer umfassen, während der sich das Berührelement in dem Erkennungsbereich befindet, ohne dass währenddessen eine Berührung des Anzeigeelements registriert wird, wie dies bereits zuvor im Zusammenhang mit der Bedienschnittstelle erläutert wurde. Ebenso kann ein Verfahren gemäß einem Ausführungsbeispiel ferner ein Registrieren einer Berührung des berührungsempfindlichen Anzeigeelements mit dem Berührelement durch einen Benutzer umfassen. Auf das Registrieren der Berührung kann dann eine Aktion ausgelöst oder durchgeführt werden. Im Falle einer Implementierung einer Bedienschnittstelle gemäß einem Ausführungsbeispiel kann hierzu beispielsweise die Steuerschaltung entsprechend ausgebildet sein.

Bei einem Ausführungsbeispiel eines solchen Verfahrens können die zuvor genannten Verfahrensschritte in der angegebenen, jedoch auch gegebenenfalls in einer abweichenden Reihenfolge durchgeführt werden. So können gegebenenfalls einzelne Verfahrensschritte simultan, zumindest jedoch auch zeitlich überlappend erfolgen, sofern sich aus deren Beschreibung oder dem technischen Zusammenhang nichts anderes ergibt.

Benachbart sind hierbei zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen. Elektrische oder andere Komponenten sind miteinander mittelbar über eine weitere Komponente oder unmittelbar miteinander derart gekoppelt, dass diese einen Signalaustausch zwischen den betreffenden Komponenten ermöglichen. So kann die entsprechende Kopplung abschnittsweise oder vollständig beispielsweise elektrisch, optisch, magnetisch oder mittels Funktechnik implementiert und umgesetzt sein.

Nachfolgend werden unter Bezugnahme auf die beigefügten Figuren Ausführungsbeispiele näher beschrieben und erläutert.
- Fig. 1: zeigt eine Frontansicht einer Bedienschnittstelle gemäß einem Ausführungsbeispiel;
- Fig. 2: zeigt eine Seitenansicht der in Fig. 1 gezeigten Bedienschnittstelle gemäß einem Ausführungsbeispiel;
- Fig. 3: zeigt eine schematisch vereinfachte perspektivische Darstellung einer Bedienschnittstelle gemäß einem weiteren Ausführungsbeispiel;
- Fig. 4: zeigt eine Seitendarstellung der in Fig. 3 gezeigten Bedienschnittstelle gemäß einem Ausführungsbeispiel;
- Fig. 5a: zeigt eine schematische Darstellung eines virtuellen Bedienelements;
- Fig. 5b: zeigt eine schematische Darstellung des in Fig. 5a gezeigten virtuellen Bedienelements, welches dezent hervorgehoben ist;
- Fig. 5c: zeigt das in den Fig. 5a und 5b gezeigte virtuelle Bedienelement, welches durch den Einsatz einer dreidimensionalen Darstellung und eines Leuchteffekts hervorgehoben ist; und
- Fig. 6: zeigt ein Flussdiagramm eines Verfahrens zum Anzeigen einer die Bedienung der Bedienschnittstelle erleichternden Information gemäß einem Ausführungsbeispiel.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

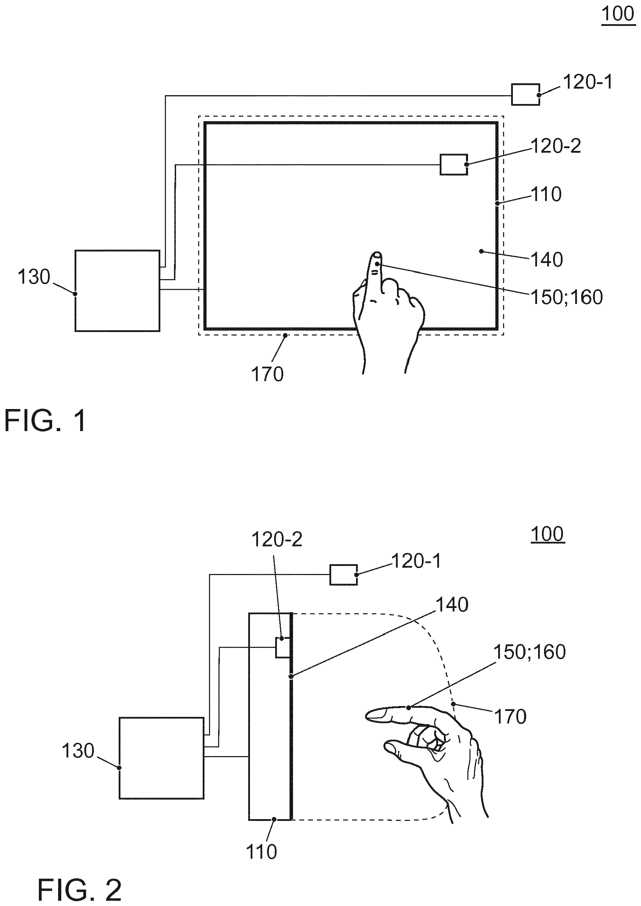

Fig. 1 zeigt eine Frontansicht einer Bedienschnittstelle 100 gemäß einem Ausführungsbeispiel. Fig. 2 zeigt eine entsprechende Seitenansicht der Bedienschnittstelle 100 aus Fig. 1.

Die Bedienschnittstelle 100 umfasst ein berührungsempfindliches Anzeigeelement 110 und wenigstens einen Sensor 120. Bei dem in den Fig. 1 und 2 gezeigten Ausführungsbeispiel weist die Bedienschnittstelle 100 zwei Sensoren 120-1, 120-2 auf, wobei der Sensor 120-2 als Teil des berührungsempfindlichen Anzeigeelements 110 ausgeführt ist. Bei anderen Ausführungsbeispielen kann jedoch gegebenenfalls auch eine größere oder eine geringere Anzahl von Sensoren 120 implementiert werden. Diese sind zusammen mit dem berührungsempfindlichen Anzeigeelement 110 ausgebildet, um die nachfolgend beschriebenen Funktionen im Zusammenspiel mit einer Steuerschaltung 130 der Bedienschnittstelle 100 auszuführen.

Zu diesem Zweck sind der oder die Sensoren 120 sowie das berührungsempfindliche Anzeigeelement 110 mit der Steuerschaltung 130 derart gekoppelt, sodass zwischen diesen informationsübermittelnde Signale ausgetauscht werden können. Bei diesem kann es sich beispielsweise um elektrische, optische oder andere Signale handeln, die beispielsweise über individuelle Leitungen, jedoch auch über Datenbusse oder eine Kombination derselben übertragen werden können. Die betreffenden, zwischen den Komponenten ausgetauschten Signale können hierbei sowohl hinsichtlich ihrer Signalstärken, wie auch hinsichtlich ihres zeitlichen Verlaufs unabhängig voneinander diskret oder kontinuierlich ausgestaltet sein. So können beispielsweise analoge Signale, jedoch auch digitale Signale zwischen den betreffenden Komponenten ausgetauscht werden.

So können die Sensoren 120 beispielsweise entsprechende Sensorsignale der Steuerschaltung 130 übermitteln. Gleiches kann gegebenenfalls auch für das berührungsempfindliche Anzeigeelement 110 gelten. Darüber hinaus kann die Steuerschaltung 130 dem berührungsempfindlichen Anzeigeelement 110 und gegebenenfalls den Sensoren 120 auch Steuersignale übermitteln.

Während das berührungsempfindliche Anzeigeelement 110 ausgebildet ist, um einem in den Fig. 1 und 2 nicht gezeigten Benutzer eine Information anzuzeigen, sind die Sensoren 120 gegebenenfalls zusammen mit dem Anzeigeelement 110 ausgebildet, um verschiedene Funktionen zu erfüllen, die nachfolgend näher beschrieben werden.

Um dem Benutzer eine Anzeige der zuvor erwähnten Information zu ermöglichen, weist das berührungsempfindliche Anzeigeelement 110 eine Anzeigefläche 140 auf, bei der es sich beispielsweise um eine matrixbasierte Anzeigefläche handeln kann, welche eine einfarbige und/oder mehrfarbige Darstellung von Informationen, Objekten und anderen Strukturen ermöglicht.

Die Sensoren 120 bzw. das berührungsempfindliche Anzeigeelement 110 sind hingegen ausgebildet, um eine Berührung des Anzeigeelements 110, also beispielsweise der Anzeigefläche 140 mit einem Berührelement 150, bei dem es sich beispielsweise um einen Finger 160, einen Teil desselben oder auch ein anderer Teil einer Hand des Benutzers handeln kann, zu registrieren. Erfasst das berührungsempfindliche Anzeigeelement 110 oder ein entsprechender Sensor 120, beispielsweise der in dem berührungsempfindlichen Anzeigeelement 110 integrierte Sensor 120-2 eine solche Berührung, kann das Anzeigeelement 110 oder der Sensor 120 ein entsprechendes Sensorsignal der Steuerschaltung 130 übermitteln. Diese kann dann eine bestimmte Aktion auslösen oder durchführen, sofern dies mit einem zuvor definierten Satz von Regeln oder Bedingungen übereinstimmt, der beispielsweise kontextsensitiv von den auf der Anzeigefläche 140 dargestellten Informationen abhängen kann. So kann der Benutzer beispielsweise ein virtuelles Bedienelement mit dem Berührelement 150 berühren, woraufhin die Steuerschaltung 130 eine dem betreffenden virtuellen Bedienelement zugeordnete Funktion ausführt oder diese durch Aus- oder Weitergabe eines entsprechenden Steuersignals veranlasst.

Neben dem Finger 160 bzw. einem Teil desselben können die Sensoren 120 und/oder das berührungsempfindliche Anzeigeelement 110 auch derart ausgestaltet sein, sodass diese einen anderen Teil der Hand des Benutzers als Berührelement 150 erkennen, mit dessen Hilfe das Auslösen bzw. Durchführen einer Aktion durch ein Berühren des Anzeigeelements 110 mit dem Berührelement 150 hervorgerufen werden kann.

Die Sensoren 120 und das berührungsempfindliche Anzeigeelement 110 sind ferner derart ausgebildet, sodass diese eine Gegenwart des Berührelements 150 in einem Erkennungsbereich 170 zu registrieren, der in den Fig. 1 und 2 als gestrichelte Linie eingezeichnet ist und sich an eine dem Benutzer zugewandte Seite des Anzeigeelements 110 anschließt. Bei dem hier gezeigten Ausführungsbeispiel schließt sich der Erkennungsbereich 170 unmittelbar an die Anzeigefläche 140 des Anzeigeelements 110 an. Der Erkennungsbereich 170 ist hierbei so ausgestaltet, dass diese das Anzeigeelement 110 bzw. seine Anzeigefläche 140 im Wesentlichen derart vollständig einschließt, sodass das Berührelement 150 den Erkennungsbereich 170 passieren muss, wenn der Benutzer das Berührelement 150 zu dem Anzeigeelement 110 führt oder bewegt. Der Erkennungsbereich erstreckt sich so ausgehend von der Anzeigefläche 140 bzw. dem Anzeigeelement 110 senkrecht zu diesen in einen Raum, der dem Benutzer zugewandt ist. Der Erkennungsbereich stellt so ein Volumen des Raums dar.

Erkennt nun die Steuerschaltung 130, dass sich das Berührelement 150 während einer vorbestimmten Zeitspanne in dem Erkennungsbereich 170 befindet, ohne dass jedoch währenddessen eine Berührung des Anzeigeelements 110, also beispielsweise der Anzeigefläche 140, registriert wurde, kann diese das Anzeigeelement 110 so ansteuern, dass auf dem Anzeigeelement 110 eine einer Bedienung der Bedienschnittstelle erleichternde Information angezeigt oder wiedergegeben wird. Zu diesem Zweck kann die Steuerschaltung 130 beispielsweise eine Zeitdauer erfassen, während der sich das Berührelement 150 in dem Erkennungsbereich 170 befindet. Übersteigt diese erfasste Zeitdauer die vorbestimmte Zeitspanne oder entspricht dieser, kann die Steuerschaltung 130 daraus schließen, dass der Benutzer hinsichtlich der Bedienung der Bedienschnittstelle unsicher ist, wenn in dieser Zeitdauer eine Berührung des Anzeigeelements durch den Benutzer unterblieben ist. Die vorbestimmte Zeitspanne kann - je nach Implementierung und Anwendung - beispielsweise wenigstens 3 s, wenigstens 5 s, wenigstens 8 s, wenigstens 10 s oder wenigstens 15 s betragen. Sie kann optional insbesondere unabhängig von einer Bewegung des Berührelements 150 in dem Erkennungsbereich 170 bzw. durch diesen sein.

Die Sensoren 120 können hierbei beispielsweise als resistive Sensoren, kapazitive Sensoren, optische Sensoren oder ultraschallbasierte Sensoren implementiert werden, mit deren Hilfe eine Berührung des Anzeigeelements 110 mit dem Berührelement 150 oder einer Annäherung desselben, also eine Gegenwart des Berührelements 150 in dem Erkennungsbereich 170 registriert werden kann. Ebenso können gegebenenfalls auch Wärmesensoren eingesetzt werden, welche sich eine Wärmeabstrahlung eines Fingers 160 oder eines anderen Teils der menschlichen Hand zunutze machen, um so eine Annäherung der Hand, des Fingers 160 und gegebenenfalls auch eine Berührung derselben mit dem Anzeigeelement 110 zu detektieren.

Im Bereich der kapazitiven Sensoren können so beispielsweise solche eingesetzt werden, bei denen ein Hochfrequenzfeld zwischen dem Benutzer und dem Anzeigeelement eingesetzt wird, dessen Signalstärke und/oder Phasenlager von einem Abstand des Benutzers, also insbesondere seines Fingers 160 oder seiner Hand von dem Anzeigeelement 110 abhängt. Werden beispielsweise im Kraftfahrzeugbereich für Fahrer und Beifahrer sowie gegebenenfalls weitere Passagiere unterschiedliche Frequenzen verwendet, kann so die Steuerschaltung 130 beispielsweise auch erfassen, welcher Benutzer das Anzeigeelement 110 bedient.

Ebenso können auch optische Sensoren eingesetzt werden, zu denen beispielsweise auch kamerabasierte Systeme zählen. Alternativ oder ergänzend können im Bereich der optischen Sensoren neben den zuvor erwähnten wärmestrahlungsbasierten Sensoren, also beispielsweise Infrarotsensoren, auch solche verwendet werden, bei denen Signale von Leuchtdioden erfasst und beispielsweise auf eine Unterbrechung, eine Reflexion oder andere Strahlveränderungen überprüft werden. Gleiches gilt ebenso für ultraschallbasierte Systeme.

Wenigstens einer der Sensoren 120 kann so gegebenenfalls als Annäherungssensor implementiert werden, weshalb im Zusammenhang mit einer Bedienschnittstelle 100 gemäß einem Ausführungsbeispiel auch von einer Bedienschnittstelle mit einer einstufigen, zweistufigen oder mehrstufigen Annäherungssensorik gesprochen wird.

Aktiviert so die Hand des Nutzers die Annäherungssensorik und befindet sich seit 3, 5, 8, 10 oder 15 s in dem auch als Auslösebereich bezeichneten Erkennungsbereich 170, ohne dass eine Berührung mit dem Anzeigeelement 110 (Touch Event) stattgefunden hat, kann über die Steuerschaltung 130 auf dem Anzeigeelement 110 eine die Bedienung der Bedienschnittstelle 100 erleichternde Information eingeblendet werden. So kann beispielsweise auf der Anzeigefläche 140 dann ein Hilfsmenü und/oder eine Hilfsanzeige zur Bedienung der Bedienschnittstelle 100, die auch als Touchscreen bezeichnet wird, eingeblendet werden. So kann beispielsweise als Hilfsmenü oder Hilfsanzeige eine entsprechende Darstellung gewählt werden, bei der beispielsweise einzelne virtuelle Bedienelemente hinsichtlich ihrer Funktionalität erläutert bzw. erklärt werden. Es können so beispielsweise Pop-up-Hilfsfenster realisiert werden, mit deren Hilfe gegebenenfalls eine Bedienung der Bedienschnittstelle 100 erleichtert werden kann. Auch können gegebenenfalls neue, kontextbezogene Hilfsmenüs eingeblendet werden, über die ebenfalls eine Bedienung der Bedienschnittstelle gegebenenfalls einfacher und intuitiver gestaltet werden kann.

Alternativ oder ergänzend hierzu kann die Bedienschnittstelle 100 bzw. die Steuerschaltung 130 auch so ausgebildet sein, dass, wenn beispielsweise eine Hand des Nutzers die Annäherungssensorik (Sensoren 120) aktiviert hat und sich seit beispielsweise 3, 5, 8, 10 oder 15 s im Erkennungsbereich 170 befindet, ohne dass eine Berührung mit dem Anzeigeelement 110 stattgefunden hat, können auf der Anzeigefläche 140, die auch als Bildschirm, Screen oder Display bezeichnet wird, die bedienbaren virtuellen Bedienelemente noch deutlicher hervorgehoben werden, indem beispielsweise fettere Striche, eine größere Darstellung, eine dreidimensionale Darstellung, eine stärke dreidimensionale Darstellung, eine Animation, zusätzliche Schatten, Leuchterscheinungen (Glow), ein höherer Kontrast, stärkere Farben oder eine fotorealistischere Darstellung verwendet werden.

Selbstverständlich kann es gegebenenfalls ratsam sein, um eine Akzeptanz eines Benutzers einem solchen System gegenüber zu steigern, die Wiedergabe der die Bedienung der Bedienschnittstelle 100 erleichternden Informationen auf dem Anzeigeelement 110 abschaltbar oder ausschaltbar zu gestalten. So kann beispielsweise eine entsprechende Hilfeanzeige in einem Einstellungsmenü ausschaltbar ausgeführt sein.

Bedienschnittstellen 100 gemäß einem Ausführungsbeispiel können hierbei bei einer Vielzahl von Anwendungsgebieten eingesetzt werden. Sie können beispielsweise im Kraftfahrzeugbereich eingesetzt werden, um dort integrierte Multifunktionssysteme zu bedienen, die beispielsweise ein Navigationssystem, ein Unterhaltungssystem (Infotainment-System), ein Datenaustauschsystem, mit dessen Hilfe beispielsweise Daten über eine Mobilfunkverbindung mit dem Internet ausgetauscht werden können, sowie Systeme zur Klimasteuerung und andere Fahrzeug-relevante Systeme vorgenommen werden können. Ausführungsbeispiele einer Bedienschnittstelle 100 können so beispielsweise als Touchscreen-Infotainment-System mit einer einstufigen Annäherungssensorik implementiert werden, wie diese im Zusammenhang mit den Fig. 1 und 2 gezeigt ist, jedoch auch gegebenenfalls mit einer zweistufigen oder mehrstufigen Annäherungssensorik implementiert werden.

Ebenso können Ausführungsbeispiele einer Bedienschnittstelle jedoch auch bei anderen elektrischen und elektronischen Komponenten zum Einsatz gebracht werden, zu denen beispielsweise Systeme im Heimbereich, beispielsweise Unterhaltungssysteme (Home Entertainment) zählen.

Selbstverständlich müssen bei Ausführungsbeispielen einer Bedienschnittstelle 100 gemäß einem Ausführungsbeispiel nicht alle der zuvor beschriebenen Ausgestaltungen und Merkmale implementiert werden. So kann beispielsweise eine Ausgestaltung im Hinblick auf die geometrische Anordnung des Erkennungsbereichs 170 zu dem Anzeigeelemente 110 bzw. der Anzeigefläche 140 anders ausgestaltet werden. Ebenso kann gegebenenfalls die Steuerschaltung im Hinblick auf die Ausgestaltung der vorbestimmten Zeitspanne von dem zuvor beschriebenen Ausführungsformen abweichen. Auch kann gegebenenfalls eine Abschaltbarkeit der die Wiedergabe der Bedienung erleichternden Informationen als optionale Komponente entfallen.

Nicht zuletzt im Hinblick auf die Zahl und Art der verwendeten Sensoren, die zum Teil im Rahmen des Anzeigeelements 110 implementiert sein können, können verschiedene Bedienschnittstellen 100 gemäß einem Ausführungsbeispiel von anderen abweichen. So können die Sensoren 120 vollständig oder teilweise als Teil der berührungsempfindlichen Anzeigeelemente 110 implementiert werden. Es können jedoch auch zusätzlich oder alternativ externe Sensoren 120 verwendet werden, die die zuvor beschriebenen Funktionen ermöglichen.

Bei dem in den Fig. 1 und 2 gezeigten Ausführungsbeispiel einer Bedienschnittstelle 100 kann so also beispielsweise eine Zeit oder Zeitdauer gemessen werden, in der sich die Hand, der Finger 160 oder ein anderes Berührelement 150 im Erkennungsbereich 170 befindet. Relevant ist hierbei die Zeit, während der die Hand, der Finger 160 oder das Berührelement 150 das Anzeigeelement 110, also den Touchscreen nicht berührt, sich jedoch in dem Erkennungsbereich 170 befindet. Es kann so in Abhängigkeit einer Annäherung des Berührelements 150 bei einem Ausbleiben einer Berührung (Touch) eine entsprechende Information dargestellt werden.

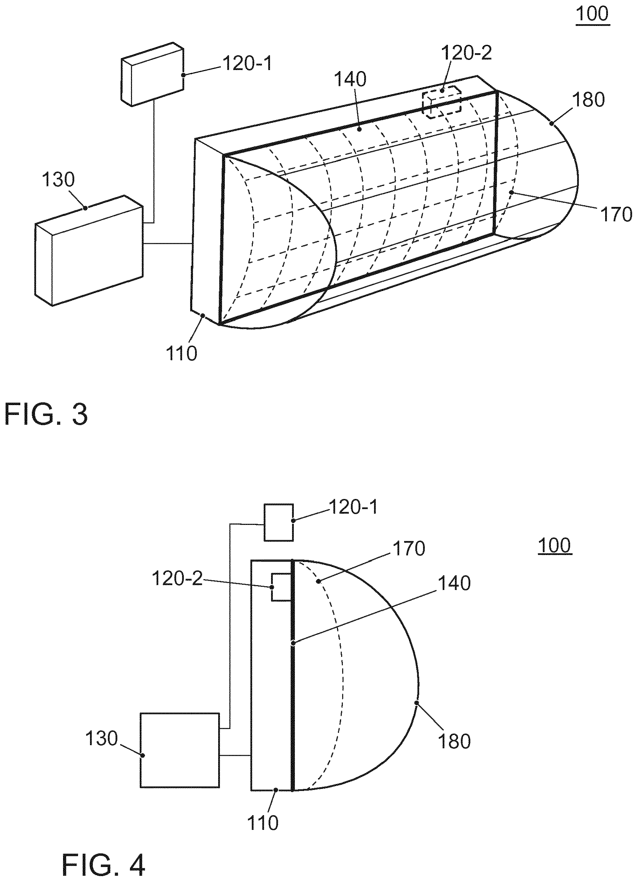

Fig. 3 zeigt ein schematisch vereinfachtes Blockschaltbild eines weiteren Ausführungsbeispiels eines Bediensystems 100 in einer perspektivischen Darstellung, welche sich von der in Fig. 1 und 2 gezeigten Bedienschnittstelle 100 im Wesentlichen hinsichtlich der Ausgestaltung des Erkennungsbereichs 170 und eines weiteren Erkennungsbereichs 180 unterscheidet. Um diese Unterscheidung deutlicher hervortreten zu lassen, ist in Fig. 3 eine perspektivische Darstellung der Bedienschnittstelle 100 gewählt worden, während Fig. 4 ein in Fig. 2 ähnlicher Seitenansicht der Bedienschnittstelle 100 zeigt.

Die in den Fig. 3 und 4 gezeigte Bedienschnittstelle 100 weicht von der zuvor beschriebenen im Wesentlichen dadurch ab, dass nunmehr neben dem Erkennungsbereich 170, der im vorliegenden Fall räumlich kleiner ausgestaltet ist als dies in dem Ausführungsbeispiel zuvor der Fall war, ein weiterer Erkennungsbereich 180 implementiert ist. Der weitere Erkennungsbereich 180 schließt sich hierbei an den Erkennungsbereich 170 an einer dem Benutzer zugewandten Seite desselben an. Auch hier kann sich der weitere Erkennungsbereich 180 unmittelbar an den Erkennungsbereich 170 anschließen und optional so ausgestaltet sein, dass diese den Erkennungsbereich im Wesentlichen derart vollständig einschließt, sodass das Berührelement 150, welches in den Fig. 3 und 4 nicht gezeigt ist, den Erkennungsbereich 170 nur dann erreichen, wenn dieses zuvor den weiteren Erkennungsbereich 180 passiert oder sich durch diesen bewegt hat. Anders ausgedrückt kann der weitere Erkennungsbereich 180 den Erkennungsbereich 170 im Wesentlichen derart vollständig einschließen, sodass das Berührelement 150 (nicht gezeigt in Fig. 3 und 4) dem weiteren Erkennungsbereich 180 passiert, wenn der Benutzer das Berührelement 150 in den Erkennungsbereich 170 bewegt.

Die Steuerschaltung 130 kann in einem solchen Fall ferner so ausgebildet sein, dass diese das Anzeigeelement 110 bzw. die Anzeigefläche 140 derart ansteuert, dass dieses eine geänderte Darstellung der auf dem Anzeigeelement 110 dargestellten Information verwendet, wenn sich das Berührelement 150 während einer weiteren vorbestimmten Zeitspanne in dem weiteren Erkennungsbereich 180 und/oder dem Erkennungsbereich 170 befindet, ohne dass während dieser Zeit eine Berührung des Anzeigeelements 110 registriert wird. Die Steuerschaltung 130 kann so eine weitere die Bedienung des Bediensystems 100 erleichternde Information auf dem Anzeigeelement 110 bzw. seiner Anzeigefläche 140 wiedergegeben werden. Zu diesem Zweck kann die Steuerschaltung 130 entsprechend ausgebildet sein, um eine Zeitdauer zu erfassen, während der sich das Berührelement 150 in dem weiteren Erkennungsbereich 180 bzw. in dem Erkennungsbereich 170 befindet. Optional kann die Steuerschaltung 130 hierbei auch nur den weiteren Erkennungsbereich 180 im Rahmen der Wiedergabe der weiteren Informationen prüfen.

Der weitere Erkennungsbereich 180 kann sich so beispielsweise ausgehend von dem Anzeigeelement 110 oder seiner Anzeigefläche 140 von einigen Zentimetern bis hin zu einigen zehn Zentimetern zu der Seite hin erstrecken, die dem Benutzer zugewandt ist. Der weitere Erkennungsbereich 180 kann so beispielsweise eine Grenze aufweisen, die dem Benutzer zugewandt ist und einen Abstand von der Anzeigefläche 140 oder dem Anzeigeelement 110 von beispielsweise 5 bis 50 cm, also beispielsweise von etwa 20 cm aufweisen.

Im Unterschied hierzu kann sich der Erkennungsbereich 170 ausgehend von dem Anzeigeelement 110 oder seiner Anzeigefläche 140 geringer zu dem Benutzer hin erstrecken. Dieser kann sich so beispielsweise höchstens 10 cm auf den Benutzer hin erstrecken. So kann beispielsweise eine Grenze des Erkennungsbereichs 170, die dem Benutzer zugewandt ist und gleichzeitig eine Grenze des weiteren Erkennungsbereichs 180 darstellt, einen Abstand von dem Anzeigeelement 110 oder der Anzeigefläche 140 von etwa 5 cm aufweisen.

Entsprechend können der wenigstens eine Sensor 120 und das berührungsempfindliche Anzeigeelement 110 ferner ausgebildet sein, um auch die Gegenwart des Berührelements 150 in dem weiteren Erkennungsbereich 180 zu registrieren und über ein entsprechendes Signal der Steuerschaltung 130 zu übermitteln. Der weitere Erkennungsbereich 180 schließt sich hierbei, wie dies bereits erläutert wurde, an den Erkennungsbereich 170 an einer dem Benutzer zugewandten Seite an.

Die weitere Zeitspanne, während der das Berührelement 150 sich in dem weiteren Erkennungsbereich 180 aufhält, ohne dass es hierbei zu einem Registrieren eines Berührens des Anzeigeelements 110 kommt, kann wiederum beispielsweise wenigstens 3 s, wenigstens 5 s, wenigstens 8 s, wenigstens 10 s oder wenigstens 15 s betragen. Auch hier kann die weitere vorbestimmte Zeitspanne entsprechend von einer Bewegung des Berührelements 150 in dem oder durch den weiteren Erkennungsbereich 180 unabhängig sein.

Erkennt nun die Steuerschaltung, dass während der vorbestimmten weiteren Zeitspanne das Bedienelement 150 in den weiteren Erkennungsbereich 180 sich befunden hat, es jedoch nicht zu einer Berührung des Anzeigeelements 110 gekommen ist, kann dieser das Anzeigeelement 110 so ansteuern, dass dieses eine weitere die Bedienung der Bedienschnittstelle 100 erleichternde Information auf dem Anzeigeelement 110 wiedergibt. Auch hier kann dies wiederum beispielsweise ein dezentes Hervorheben wenigstens eines auf dem Anzeigeelement dargestellten virtuellen Bedienelements oder auch ein Einblenden oder Darstellen des Hilfsmenüs oder eines weiteren Hilfsmenüs und/oder der Hilfsanzeige oder einer weiteren Hilfsanzeige umfassen.

Selbstverständlich kann auch das Ändern der Darstellung gegebenenfalls als optionale Komponente abschaltbar oder ausschaltbar ausgestaltet sein.

Die Fig. 3 und 4 zeigen so also ein Ausführungsbeispiel einer Bedienschnittstelle 100 gemäß einem Ausführungsbeispiel, bei der eine zweistufige Annäherungssensorik mithilfe der Sensoren 120 implementiert ist. Aktiviert die Hand des Nutzers die Annäherungssensorik und befindet sich seit 3, 5, 8, 10 oder 15 s in dem ersten Auslösebereich (weiterer Erkennungsbereich 180) oder dem zweiten Auslösebereich (Erkennungsbereich 170), ohne dass eine Berührung des Anzeigeelements 110 (Touch-Event) stattgefunden hat, kann auf dem Anzeigefeld 140 beispielsweise das bereits zuvor erwähnte weitere Hilfemenü oder Hilfemenü zur Bedienung der Bedienschnittstelle 100 eingeblendet werden. Ergänzend oder alternativ können virtuelle Bedienelemente, die auf dem Anzeigenelement 110 dargestellt werden, im Rahmen der Änderung der Darstellung auf dem Anzeigeelement 110 beispielsweise dezent optisch hervorgehoben werden.

Ist so beispielsweise eine zweistufige Annäherungssensorik implementiert, können beispielsweise drei unterschiedliche Anzeigevarianten für ein virtuelles Bedienelement implementiert werden. Ist beispielsweise das Berührelement 150 weder in dem Erkennungsbereich noch in dem weiteren Erkennungsbereich 180, also abgenähert, kann das betreffende virtuelle Bedienelement beispielsweise klein und ohne Rahmen, als eine zweidimensionale Darstellung gezeigt werden. Gegebenenfalls kann eine grafische Darstellung auch vollständig entfallen bzw. eine Transparenz desselben auf 100 % eingestellt sein. Wird nun aus dem abgenäherten Zustand das Berührelement 150 angenähert, sodass dieses in einer ersten Stufe in den weiteren Erkennungsbereich 180 eindringt, kann das virtuelle Bedienelement beispielsweise größer und/oder mit einem Rahmen dargestellt werden, es kann jedoch auch eine dreidimensionale Darstellung herangezogen werden und/oder eine entsprechende Füllung aufweisen. Dringt das Berührelement in den Erkennungsbereich 170 ein und verweilt dort die entsprechende Zeitdauer, kann das virtuelle Bedienelement gegebenenfalls noch größer, mit einem fetteren Rahmen, im Rahmen einer dreidimensionalen Darstellung und/oder mit einer Füllung und gegebenenfalls Leuchteffekten (Glow) dargestellt werden.

Es kann so im Rahmen der Verwendung einer zweistufigen Annäherungssensorik beispielsweise eine dritte Stufe der Anzeige von bedienbaren Elementen implementiert werden. Hierdurch kann nicht nur eine Bedienung des Systems gegebenenfalls vereinfacht und intuitiver ausgestaltet werden, dies kann auch im Rahmen eines optisch gefälligen Gesamtkonzepts erfolgen, sodass eine als angenehm empfundene Inszenierung der betreffenden Informationen auf der Anzeigefläche 140 möglich ist. Die Verwendung einer solchen Annäherungssensorik kann so beispielsweise einer besseren Erkennbarkeit der Bedienelemente und damit einer einfacheren und intuitiveren Bedienbarkeit bei einem gleichzeitig anmutigen Design in dem abgenäherten Zustand ermöglichen, wie dieser zuvor beschrieben wurde.

Selbstverständlich kann auch diese Implementierung abschaltbar ausgeführt sein, um so eine Akzeptanz durch den Benutzer zu verbessern. Die dritte Anzeige kann so beispielsweise in einem Einstellmenü ausschaltbar sein. Anders ausgedrückt kann bei einem Ausführungsbeispiel eine Bedienschnittstelle optional die Steuerschaltung so ausgebildet sein, um die Verwendung der geänderten Darstellung der auf dem Anzeigeelement dargestellten Informationen abschaltbar zu machen.

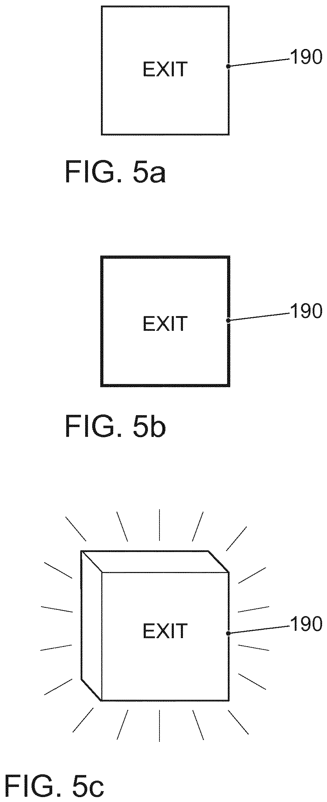

Fig. 5a zeigt so ein virtuelles Bedienelement 190, bei dem es sich beispielsweise um eine virtuelle Tastfläche handeln kann, die auch als Button bezeichnet wird. Hierbei zeigt Fig. 5a beispielsweise einen Zustand, bei dem das Berührelement 150 nicht in einem der Erkennungsbereiche 170, 180 sich aufhält oder noch nicht die vorbestimmte Zeitdauer bzw. vorbestimmte weitere Zeitdauer überschritten hat.

Befindet sich das Berührelement 150 in dem weiteren Erkennungsbereich 180 länger als die vorbestimmte weitere Zeitspanne, kann die Steuerschaltung die Darstellung von auf dem Anzeigeelemente 110 dargestellten Informationen beispielsweise so ändern, dass das virtuelle Bedienelement 190 durch Verwendung stärkerer Linien deutlicher hervorgehoben wird, wie dies beispielsweise in Fig. 5b dargestellt ist.

Hält sich hingegen das Berührelement 150 mehr als die vorbestimmte Zeitspanne in dem Erkennungsbereich 170 auf, ohne dass es zu einem Berühren des Anzeigeelements 110 gekommen ist, kann die Steuerschaltung 130 das Anzeigeelement 110 derart ansteuern, sodass das virtuelle Bedienelement 190 beispielsweise dreidimensional mit einem entsprechenden Leuchteffekt um seinen Rand herum dargestellt wird. Ergänzend hierzu kann ebenso eine Schriftgröße der Beschriftung des virtuellen Bedienelements 190 vergrößert werden, wie dies Fig. 5c zeigt.

So weisen die virtuellen Bedienelemente 190 in den Fig. 5a und 5b identisch große Beschriftungen "EXIT" auf, während in Fig. 5c die Darstellung des Worts "EXIT" vergrößert, also mit einer entsprechend größeren Schriftgröße. Selbstverständlich handelt es sich bei den beschriebenen Hervorhebungen und den verwendeten Beschriftungen nur um einzelne Beispiele.

Selbstverständlich können auch andere Änderungen der Darstellung von auf dem Anzeigeelement 110 wiedergegebenen Informationen bzw. einer Wiedergabe entsprechender eine Bedienung der Bedienschnittstelle erleichternder Informationen auf dem Anzeigeelement 110 erfolgen.

Auch im Zusammenhang mit dem in den Fig. 3 und 4 gezeigten Ausführungsbeispiel gilt, dass selbstverständlich nicht alle der zuvor beschriebenen Ausgestaltungen im Rahmen anderer Ausführungsbeispiele implementiert sein müssen. Auch hier können gegebenenfalls Abweichungen, beispielsweise im Hinblick auf die geometrische Anordnung der Erkennungsbereiche 170, 180 implementiert werden, um nur ein Beispiel zu nennen.

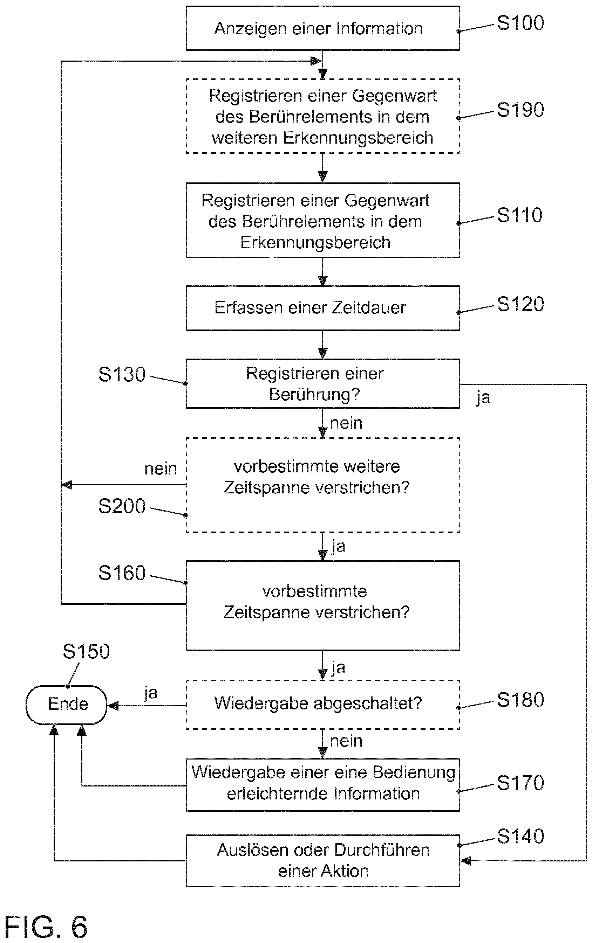

Fig. 6 zeigt abschließend ein Flussdiagramm eines Verfahrens zum Anzeigen einer eine Bedienung einer Bedienschnittstelle 100 erleichternden Information. Zunächst wird im Rahmen eines Schritts S100 eine Information auf dem Anzeigeelement 110 bzw. der Anzeigefläche 140 angezeigt. Anschließend wird im Rahmen eines Schritts S110 versucht, eine Gegenwart des Berührelements 150 in dem Erkennungsbereich 170 zu registrieren. Hierzu wird im Rahmen eines Schritts S120 eine Zeitdauer entsprechend erfasst. Im Rahmen eines Schritts S130 wird versucht, eine Berührung zu registrieren. Ist hierbei eine solche registriert worden, wird die mit der Berührung assoziierte Aktion im Rahmen eines Schritts S140 ausgelöst bzw. durchgeführt, bevor das Verfahren in einem Schritt S150 endet.

Wird im Rahmen des Schritts S130 jedoch keine Berührung registriert, wird im Rahmen eines Schritts 160 geprüft, ob die vorbestimmte Zeitspanne verstrichen ist. Ist dies der Fall, kann im Rahmen eines Schritts S170 eine die Bedienung der Bedienschnittstelle 100 erleichternde Information auf dem Anzeigeelement 110 wiedergegeben werden, bevor das Verfahren erneut im Schritt S150 endet. Ist dies hingegen nicht der Fall, ist also die vorbestimmte Zeitspanne noch nicht verstrichen, kann ein Rücksprung nach dem Schritt S100 des Anzeigens der Information erfolgen, sodass erneut beispielsweise eine Gegenwart des Berührelements in dem Erkennungsbereich 170 registriert, die Zeitdauer erfasst und erneut eine Prüfung auf das Vorliegen einer Berührung durchgeführt werden kann.

Optional kann selbstverständlich im Rahmen eines Schritts S180 zwischen dem Prüfen, ob die vorbestimmte Zeitspanne verstrichen ist (Schritt S160) und dem Wiedergeben der Information im Schritt S170 eine Prüfung stattfinden, ob die Wiedergabe abgeschaltet ist. Ist dies nicht der Fall, kann eine entsprechende Wiedergabe der Information in dem Schritt S170 erfolgen, während in dem anderen Fall das Verfahren im Schritt S150 beendet werden kann.

Bei dem zuvor beschriebenen Verfahren handelt es sich um ein solches, welches beispielsweise mithilfe eines einstufigen Annäherungssensors implementiert werden kann. Aber auch im Rahmen eines zweistufigen Sensors kann dieses Verfahren, wie es im Zusammenhang mit Fig. 6 bisher beschrieben wurde, umgesetzt werden. Es kann jedoch ergänzend ferner ein Registrieren einer Gegenwart des Berührelements in dem weiteren Erkennungsbereich 180 im Rahmen eines Schritts S190 umfassen, der beispielsweise nach einem Anzeigen der Information auf dem Anzeigeelement den Schritt S100 durchgeführt werden kann. Ebenso kann im Rahmen eines Schritts S200 geprüft werden, ob die vorbestimmte weitere Zeitspanne verstrichen ist, ohne dass eine Berührung registriert wurde. Der Schritt S200 kann so beispielsweise nach dem Schritt S130 des Prüfens, ob eine Berührung registriert wurde, durchgeführt werden. Wird bei der Prüfung, ob die vorbestimmte weitere Zeitspanne verstrichen ist, festgestellt, dass dies der Fall ist, kann unmittelbar oder mittelbar nach Durchlaufen beispielsweise der Schritte S160 und S180 im Rahmen des Schritts S170 auch die Darstellung von Informationen auf dem Anzeigeelement 110 geändert bzw. die weitere die Bedienung der Bedienschnittstelle 100 erleichternde Information eingeblendet werden. Ist dies hingegen nicht der Fall, kann entsprechend ein Rücksprung zu einem Schritt nach dem Anzeigen der Information auf dem Anzeigeelement 110 in Schritt S100 erfolgen.

Selbstverständlich können bei Ausführungsbeispielen eines solchen Verfahrens die beschriebenen Schritte hinsichtlich ihrer Reihenfolge voneinander abweichen, gegebenenfalls parallel oder auch zeitlich überlappend zueinander ausgeführt werden, sofern sich nichts Gegenteiliges aus der Beschreibung derselben ergibt.

Durch den Einsatz eines Ausführungsbeispiels kann gegebenenfalls eine Bedienung eines Systems, das eine solche Bedienschnittstelle 100 umfasst, einfacher und intuitiver gestaltet werden.

Die in der vorstehenden Beschreibung, den nachfolgenden Ansprüchen und den beigefügten Figuren offenbarten Merkmalen können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blue-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hineinschreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Bedienschnittstelle
- 110: berührungsempfindliches Anzeigeelement
- 120: Sensor
- 130: Steuerschaltung
- 140: Anzeigefläche
- 150: Berührelement
- 160: Finger
- 170: Erkennungsbereich
- 180: weiterer Erkennungsbereich
- 190: virtuelles Bedienelement

- S100: Anzeigen einer Information
- S110: Registrieren einer Gegenwart im Erkennungsbereich
- S120: Erfassen einer Zeitdauer
- S130: Registrieren einer Berührung?
- S140: Auslösen oder Durchführen einer Aktion
- S150: Ende
- S160: vorbestimmte Zeitspanne verstrichen?
- S170: Wiedergeben einer Information oder Ändern der Darstellung
- S180: Wiedergabe abgeschaltet?
- S190: Registrieren einer Gegenwart im weiteren Erkennungsbereich
- S200: Vorbestimmte weitere Zeitspanne verstrichen

## Patentansprüche

1. Bedienschnittstelle (100) mit folgenden Merkmalen:
einem berührungsempfindlichen Anzeigeelement (110) und wenigstens einem Sensor (120), die ausgebildet sind, um auf dem Anzeigeelement (110) eine Information einem Benutzer anzuzeigen, um eine Berührung des Anzeigeelements (110) mit einem Berührelement (150) durch den Benutzer zu registrieren und um eine Gegenwart des Berührelements (150) in einem Erkennungsbereich (170) zu registrieren, wobei sich der Erkennungsbereich (170) an eine dem Benutzer zugewandte Seite des Anzeigeelements (110) anschließt; und
einer Steuerschaltung (130), die ausgebildet ist, um das Anzeigeelement (110) derart anzusteuern, dass dieses eine eine Bedienung der Bedienschnittstelle (100) erleichternde Information auf dem Anzeigeelement (110) wiedergibt, wenn sich das Berührelement (150) während einer vorbestimmten Zeitspanne in dem Erkennungsbereich (170) befindet, ohne dass währenddessen eine Berührung des Anzeigeelements (110) registriert wurde wobei die Steuerschaltung (130) ausgebildet ist, um das Anzeigeelement (110) derart anzusteuern, dass die Wiedergabe der die Bedienung erleichternden Information ein optisches Hervorheben wenigstens eines auf dem Anzeigeelement dargestellten virtuellen Bedienelements (190) umfasst.

2. Bedienschnittstelle (100) gemäß Anspruch 1, bei der das berührungsempfindlichen Anzeigeelement (110) und der wenigstens eine Sensor (120) derart ausgebildet sind, sodass der Erkennungsbereich (170) das berührungsempfindliche Anzeigeelement (110) im Wesentlichen derart vollständig einschließt, sodass das Berührelement (150) den Erkennungsbereich (170) passiert, wenn der Benutzer das Berührelement (150) zu dem berührungsempfindlichen Anzeigeelement (110) bewegt.

3. Bedienschnittstelle (100) gemäß einem der vorhergehenden Ansprüche, bei der die Steuerschaltung (130) so ausgebildet ist, dass die vorbestimmte Zeitspanne wenigstens 3 s beträgt.

4. Bedienschnittstelle (100) gemäß einem der vorhergehenden Ansprüche, bei der die Steuerschaltung (130) derart ausgebildet ist, sodass die vorbestimmte Zeitspanne von einer Bewegung des Berührelements (150) in dem oder durch den Erkennungsbereich (170) unabhängig ist.

5. Bedienschnittstelle (100) gemäß einem der vorhergehenden Ansprüche, wobei das optische Hervorheben des wenigstens einen auf dem Anzeigeelement dargestellten virtuellen Bedienelements (190), beispielsweise ein Anzeigen eines Randes des wenigstens einen virtuellen Bedienelements (190) mit dickeren und/oder farblich hervorgehobenen Strichen, beispielsweise ein farblich hervorgehobenes Anzeigen des wenigstens einen virtuellen Bedienelements (190), beispielsweise ein vergrößertes Anzeigen des wenigstens einen virtuellen Bedienelements (190), beispielsweise ein Anzeigen des wenigstens einen virtuellen Bedienelements (190) in einer dreidimensionalen oder eine verstärkt dreidimensionalen Darstellung, beispielsweise ein pulsierendes Anzeigen des wenigstens einen virtuellen Bedienelements (190) und/oder beispielsweise ein Anzeigen des wenigstens einen virtuellen Bedienelements (190) mit einer den Rand des wenigstens einen virtuellen Bedienelements (190) umgebenden Leuchterscheinung umfasst, und/oder bei der die Steuerschaltung (130) ausgebildet ist, um das Anzeigeelement (110) derart anzusteuern, dass die Wiedergabe der die Bedienung erleichternden Information eine Darstellung eines Hilfsmenüs und/oder einer Hilfsanzeige umfasst.

6. Bedienschnittstelle (100) gemäß einem der vorhergehenden Ansprüche, bei der die Steuerschaltung (130) ausgebildet ist, um die Wiedergabe der die Bedienung der Bedienschnittstelle (100) erleichternde Information abschaltbar zu machen.

7. Bedienschnittstelle (100) gemäß einem der vorhergehenden Ansprüche, bei der das berührungsempfindlichen Anzeigeelement (110) und der wenigstens eine Sensor (120) ferner ausgebildet sind, um eine Gegenwart des Berührelements (150) in einem weiteren Erkennungsbereich (180) zu registrieren, wobei sich der weitere Erkennungsbereich (180) an einer dem Benutzer zugewandten Seite an den Erkennungsbereich (170) anschließt, und wobei die Steuerschaltung (130) ausgebildet ist, um das Anzeigeelement (110) derart anzusteuern, dass dieses eine weitere die Bedienung der Bedienschnittstelle (100) erleichternde Information wiedergibt, wenn sich das Berührelement (150) während einer weiteren vorbestimmten Zeitspanne in dem weiteren Erkennungsbereich (180) und dem Erkennungsbereich (170) befindet, ohne dass währenddessen eine Berührung des Anzeigeelements (110) registriert wurde.

8. Bedienschnittstelle (100) gemäß Anspruch 7, bei der das berührungsempfindlichen Anzeigeelement (110) und der wenigstens eine Sensor (110) derart ausgebildet sind, sodass der weitere Erkennungsbereich (180) den Erkennungsbereich (170) im Wesentlichen derart vollständig einschließt, sodass das Berührelement (150) den weiteren Erkennungsbereich (180) passiert, wenn der Benutzer das Berührelement (150) in den Erkennungsbereich (170) bewegt.

9. Bedienschnittstelle (100) gemäß einem der Ansprüche 7 oder 8, bei der Steuerschaltung (130) so ausgebildet ist, dass die weitere vorbestimmte Zeitspanne wenigstens 3 s beträgt.

10. Bedienschnittstelle (100) gemäß einem der Ansprüche 7 bis 9, bei der die Steuerschaltung (130) derart ausgebildet ist, sodass die weitere vorbestimmte Zeitspanne von einer Bewegung des Berührelements (150) in dem oder durch den weiteren Erkennungsbereich (180) unabhängig ist.

11. Bedienschnittstelle (100) gemäß einem der Ansprüche 7 bis 10, bei der die Steuerschaltung (130) ausgebildet ist, um das Anzeigeelement (110) derart anzusteuern, dass die Wiedergabe der weiteren die Bedienung der Bedienschnittstelle (100) erleichternden Information ein dezentes Hervorheben wenigstens eines auf dem Anzeigeelement (110) dargestellten virtuellen Bedienelements (190), beispielsweise durch ein Anzeigen eines Randes des wenigstens einen virtuellen Bedienelements (190) mit dickeren und/oder farblich hervorgehobenen Strichen, beispielsweise durch ein farblich hervorgehobenes Anzeigen des wenigstens einen virtuellen Bedienelements (190), beispielsweise durch ein vergrößertes Anzeigen des wenigstens einen virtuellen Bedienelements (190), beispielsweise durch ein Anzeigen des wenigstens einen virtuellen Bedienelements (190) in einer dreidimensionalen oder eine verstärkt dreidimensionalen Darstellung, beispielsweise durch ein pulsierendes Anzeigen des wenigstens einen virtuellen Bedienelements (190) und/oder beispielsweise durch ein Anzeigen des wenigstens einen virtuellen Bedienelements (190) mit einer den Rand des wenigstens einen virtuellen Bedienelements (190) umgebenden Leuchterscheinung, umfasst, und/oder bei der die Steuerschaltung (130) ausgebildet ist, um das Anzeigeelement (110) derart anzusteuern, dass die Wiedergabe der weiteren die Bedienung erleichternden Information eine Darstellung eines Hilfsmenüs und/oder einer Hilfsanzeige umfasst.

12. Bedienschnittstelle (100) gemäß einem der vorhergehenden Ansprüche, bei der das berührungsempfindlichen Anzeigeelement (110) und der wenigstens eine Sensor (120) derart ausgebildet sind, sodass das Berührelement (150) wenigstens einen Teil eines Fingers (160) und/oder wenigstens einen Teil einer Hand umfasst.

13. Verfahren zum Anzeigen einer eine Bedienung einer Bedienschnittstelle (100) erleichternde Information, umfassend:
Anzeigen (S100) einer Information auf einem berührungsempfindlichen Anzeigeelement (110)der Bedienschnittstelle;
Registrieren (S110) einer Gegenwart eines Berührelements (150) in einem Erkennungsbereich (170), wobei sich der Erkennungsbereich (170) an eine dem Benutzer zugewandte Seite des Anzeigeelements (110) anschließt;
Wiedergeben (S170) der die Bedienung der Bedienschnittstelle (100) erleichternden Information durch optisches Hervorheben wenigstens eines auf dem Anzeigeelement dargestellten virtuellen Bedienelements (190), wenn sich das Berührelement (150) während einer vorbestimmten Zeitspanne in dem Erkennungsbereich (170) befindet, ohne dass währenddessen eine Berührung des Anzeigeelements (110) registriert wurde.

14. Verfahren nach Anspruch 13, das ferner ein Registrieren (S130) einer Berührung des berührempfindlichen Anzeigeelements (110) mit dem Berührelement (150) durch den Benutzer umfasst.

15. Programm mit einem Programmcode zum Durchführen eines der Verfahren gemäß einem der Ansprüche 13 oder 14, wenn der Programmcode auf einem Computer, einem Prozessor oder einer programmierbaren Hardwarekomponente ausgeführt wird.

## Claims

1. An operating interface (100) with the following features:
a touch-sensitive display element (110) and at least one sensor (120) which are designed to display information on the display element (110) to a user in order to register a touch of the display element (110) with a touch element (150) by the user and in order to register a presence of the touch element (150) in a detection area (170), wherein the detection area (170) is adjacent to a side of the display element (110) facing toward the user; and
a control circuit (130) which is designed to control the display element (110) in such a way that the latter presents information on the display element (110) facilitating operation of the operating interface (100) if the touch element (150) is located in the detection area (170) during a predefined time period without a touch of the display element (110) having been registered during said time period, wherein the control circuit (130) is designed to control the display element (110) in such a way that the display of the information facilitating the operation comprises a visual highlighting of at least one virtual operating element (190) presented on the display element.

2. Operating interface (100) according to Claim 1, in which the touch-sensitive display element (110) and the at least one sensor (120) are designed in such a way that the detection area (170) essentially surrounds the touch-sensitive display element (110) completely in such a way that the touch element (150) must pass through the detection area (170) when the user moves the touch element (150) toward the touch-sensitive display element (110).

3. Operating interface (100) according to one of the preceding claims, in which the control circuit (130) is designed so that the predefined time period is at least 3 s.

4. Operating interface (100) according to one of the preceding claims, in which the control circuit (130) is designed in such a way that the predefined time period is independent from a movement of the touch element (150) in or through the detection area (170).

5. Operating interface (100) according to one of the preceding claims, wherein the visual highlighting of the at least one virtual operating element (190) presented on the display element comprises for example a display of an edge of the at least one virtual operating element (190) with thicker and/or color-highlighted lines, for example by means of a color-highlighted display of the at least one virtual operating element (190), for example an enlarged display of the at least one virtual operating element (190), for example a display of the at least one virtual operating element (190) in a three-dimensional or enhanced three-dimensional presentation, for example a pulsating display of the at least one virtual operating element (190) and/or for example a display of the at least one virtual operating element (190) with a luminous effect surrounding the edge of the at least one virtual operating element (190), and/or in which the control circuit (130) is designed to control the display element (110) in such a way that the display of the information facilitating the operation comprises a presentation of a help menu and/or a help display.

6. Operating interface (100) according to one of the preceding claims, in which the control circuit (130) is designed to make the presentation of the information facilitating the operation of the operating interface (100) deactivatable.

7. Operating interface (100) according to one of the preceding claims, in which the touch-sensitive display element (110) and the at least one sensor (120) are furthermore designed to register a presence of the touch element (150) in a further detection area (180), wherein the further detection area (180) is adjacent to the detection area (170) on a side facing toward the user, and wherein the control circuit (130) is designed to control the display element (110) in such a way that the latter presents further information facilitating the operation of the operating interface (100) if the touch element (150) is located in the further detection area (180) and in the detection area (170) during a further predefined time period without a touch of the display element (110) having been registered during this time period.

8. Operating interface (100) according to Claim 7, in which the touch-sensitive display element (110) and the at least one sensor (110) are designed in such a way that the further detection area (180) essentially completely surrounds the detection area (170) in such a way that the touch element (150) passes through the further detection area (180) when the user moves the touch element (150) into the detection area (170).

9. Operating interface (100) according to one of Claims 7 or 8, in which the control circuit (130) is designed so that the further predefined time period is at least 3 s.

10. Operating interface (100) according to one of Claims 7 to 9, in which the control circuit (130) is designed in such a way that the further predefined time period is independent from a movement of the touch element (150) in or through the further detection area (180) .

11. Operating interface (100) according to one of Claims 7 to 10, in which the control circuit (130) is designed to control the display element (110) in such a way that the display of the further information facilitating the operation of the operating interface (100) comprises a subtle highlighting of at least one virtual operating element (190) presented on the display element (110), for example by means of a display of an edge of the at least one virtual operating element (190) with thicker and/or color-highlighted lines, for example by means of a color-highlighted display of the at least one virtual operating element (190), for example by means of an enlarged display of the at least one virtual operating element (190), for example by means of a display of the at least one virtual operating element (190) in a three-dimensional or enhanced three-dimensional presentation, for example by means of a pulsating display of the at least one virtual operating element (190) and/or, for example, by means of a display of the at least one virtual operating element (190) with a luminous effect surrounding the edge of the at least one virtual operating element (190), and/or in which the control circuit (130) is designed to control the display element (110) in such a way that the display of the further information facilitating the operation comprises a presentation of a help menu and/or a help display.

12. Operating interface (100) according to one of the preceding claims, in which the touch-sensitive display element (110) and the at least one sensor (120) are designed in such a way that the touch element (150) comprises at least a part of a finger (160) and/or at least a part of a hand.

13. Method for displaying information facilitating operation of an operating interface (100), comprising:
displaying (S100) information on a touch-sensitive display element (110) of the operating interface;
registering (S110) a presence of a touch element (150) in a detection area (170), wherein the detection area (170) is adjacent to a side of the display element (110) facing toward the user;
presenting (S170) the information facilitating the operation of the operating interface (100) by visual highlighting of at least one virtual operating element (190) presented on the display element if the touch element (150) is located in the detection area (170) during a predefined time period without a touch of the display element (110) having been registered during said time period.

14. Method according to Claim 13, which furthermore comprises a registering (S130) of a touch of the touch-sensitive display element (110) with the touch element (150) by the user.

15. Program with a program code to carry out one of the methods according to one of Claims 13 or 14 when the program code is executed on a computer, a processor or a programmable hardware component.

## Revendications

1. Interface utilisateur (100) comprenant les éléments caractéristiques suivants :
un élément d'affichage tactile (110) et au moins un capteur (120), lesquels sont conçus pour afficher une information sur l'élément d'affichage (110) à destination d'un utilisateur afin d'enregistrer un contact de l'élément d'affichage (110) avec un élément tactile (150) par le biais de l'utilisateur et pour enregistrer la présence de l'élément tactile (150) dans une zone de détection (170), la zone de détection (170) étant contiguë à un côté de l'élément d'affichage (110) qui est tourné vers l'utilisateur ; et
un circuit de commande (130) qui est conçu pour commander l'élément d'affichage (110) de manière à ce que celui-ci reproduise sur l'élément d'affichage (110) une information qui facilite le fonctionnement de l'interface utilisateur (100) si l'élément tactile (150) se trouve dans la zone de détection (170) pendant une durée prédéterminée sans que le contact de l'élément d'affichage (110) ait été enregistré pendant ce temps, le circuit de commande (130) étant conçu pour commander l'élément d'affichage (110) de manière à ce que la reproduction de l'information facilitant le fonctionnement comprenne la mise en évidence optique d'au moins un élément de commande virtuel (190) présenté sur l'élément d'affichage.

2. Interface utilisateur (100) selon la revendication 1, dans laquelle l'élément d'affichage tactile (110) et l'au moins un capteur (120) sont conçus de telle sorte que la zone de détection (170) contiennent sensiblement complètement l'élément d'affichage tactile (110) de sorte que l'élément tactile (150) passe dans la zone de détection (170) lorsque l'utilisateur déplace l'élément tactile (150) vers l'élément d'affichage tactile (110).

3. Interface utilisateur (100) selon l'une des revendications précédentes, dans laquelle le circuit de commande (130) est conçu de telle sorte que la durée prédéterminée soit d'au moins 3 s.

4. Interface utilisateur (100) selon l'une des revendications précédentes, dans laquelle le circuit de commande (130) est conçu de telle sorte que la durée prédéterminée est indépendante du mouvement de l'élément tactile (150) dans ou à travers la zone de détection (170).

5. Interface utilisateur (100) selon l'une des revendications précédentes, la mise en évidence optique d'au moins un élément de commande virtuel (190) présenté sur l'élément d'affichage comprenant par exemple l'affichage d'un bord de l'au moins un élément de commande virtuel (190) avec des lignes plus épaisses et/ou colorées, par exemple l'affichage en couleur de l'au moins un élément de commande virtuel (190), par exemple l'affichage agrandi de l'au moins un élément de commande virtuel (190), par exemple l'affichage de l'au moins un élément de commande virtuel (190) dans une présentation tridimensionnelle ou tridimensionnelle intensifiée, par exemple l'affichage discontinu de l'au moins un élément de commande virtuel (190) et/ou par exemple l'affichage de l'au moins un élément de commande virtuel (190) avec un phénomène d'éclairage entourant le bord de l'au moins un élément de commande virtuel (190) et/ou le circuit de commande (130) étant conçu pour commander l'élément d'affichage (110) de telle sorte que la reproduction de l'information facilitant le fonctionnement comprend une présentation d'un menu auxiliaire et/ou d'un affichage auxiliaire.

6. Interface utilisateur (100) selon l'une des revendications précédentes, dans laquelle le circuit de commande (130) est conçu pour permettre la désactivation de la reproduction de l'information facilitant le fonctionnement de l'interface utilisateur (100) .

7. Interface utilisateur (100) selon l'une des revendications précédentes, dans laquelle l'élément d'affichage tactile (110) et l'au moins un capteur (120) sont en outre conçus pour enregistrer la présence de l'élément tactile (150) dans une autre zone de détection (180), l'autre zone de détection (180) étant contiguë à la zone de détection (170) sur un côté dirigé vers l'utilisateur, et le circuit de commande (130) étant conçu pour commander l'élément d'affichage (110) de manière à ce que celui-ci reproduise une information supplémentaire facilitant le fonctionnement de l'interface utilisateur (100) si l'élément tactile (150) se trouve dans la zone de détection supplémentaire (180) et dans la zone de détection (170) pendant une durée prédéterminée supplémentaire sans que le contact de l'élément d'affichage (110) ait été enregistré pendant ce temps.

8. Interface utilisateur (100) selon la revendication 7, dans laquelle l'élément d'affichage tactile (110) et l'au moins un capteur (110) sont conçus de telle sorte que la zone de détection supplémentaire (180) contiennent sensiblement complètement la zone de détection (170) de sorte que l'élément tactile (150) passe dans l'autre zone de détection (180) lorsque l'utilisateur déplace l'élément tactile (150) jusque dans la zone de détection (170).

9. Interface utilisateur (100) selon l'une des revendications 7 et 8, dans laquelle le circuit de commande (130) est conçu de telle sorte que la durée prédéterminée supplémentaire soit d'au moins 3 s.

10. Interface utilisateur (100) selon l'une des revendications 7 à 9, dans laquelle le circuit de commande (130) est conçu de telle sorte que la durée prédéterminée supplémentaire soit indépendante du mouvement de l'élément tactile (150) dans ou à travers la zone de détection supplémentaire (180).

11. Interface utilisateur (100) selon l'une des revendications 7 à 10, dans laquelle le circuit de commande (130) est conçu pour commander l'élément d'affichage (110) de telle sorte que la reproduction de l'information supplémentaire facilitant le fonctionnement de l'interface utilisateur (100) comprend une mise en évidence discrète d'au moins un élément de commande virtuel (190) présenté sur l'élément d'affichage (110), par exemple par l'affichage d'un bord de l'au moins un élément de commande virtuel (190) avec des lignes plus épaisses et/ou colorées, par exemple par l'affichage en couleur de l'au moins un élément de commande virtuel (190), par exemple par l'affichage agrandi de l'au moins un élément de commande virtuel (190), par exemple par l'affichage de l'au moins un élément de commande virtuel (190) dans une présentation tridimensionnelle ou tridimensionnelle intensifiée, par exemple par l'affichage discontinu de l'au moins un élément de commande virtuel (190) et/ou par exemple par l'affichage de l'au moins un élément de commande virtuel (190) avec un phénomène d'éclairage entourant le bord de l'au moins un élément de commande virtuel (190) et/ou dans laquelle le circuit de commande (130) est conçu pour commander l'élément d'affichage (110) de telle sorte que la reproduction de l'information supplémentaire facilitant le fonctionnement comprenne une présentation d'un menu auxiliaire et/ou d'un affichage auxiliaire.

12. Interface utilisateur (100) selon l'une des revendications précédentes, dans laquelle l'élément d'affichage tactile (110) et l'au moins un capteur (120) sont conçus de telle sorte que l'élément tactile (150) comprenne au moins une partie d'un doigt (160) et/ou au moins une partie d'une main.

13. Procédé d'affichage d'une information facilitant le fonctionnement d'une interface utilisateur (100), ledit procédé comprenant les étapes suivantes :
afficher (S100) une information sur un élément d'affichage tactile (110) de l'interface utilisateur ;
enregistrer (S110) la présence d'un élément tactile (150) dans une zone de détection (170), la zone de détection (170) étant contiguë à un côté de l'élément d'affichage (110) dirigé vers l'utilisateur ;
reproduire (S170) l'information facilitant le fonctionnement de l'interface utilisateur (100) par mise en évidence optique d'au moins un élément de commande virtuel (190) présenté sur l'élément d'affichage si l'élément tactile (150) se trouve dans la zone de détection (170) pendant une durée prédéterminée sans que le contact de l'élément d'affichage (110) ait été enregistré.

14. Procédé selon la revendication 13, comprenant en outre l'enregistrement (S130) d'un contact de l'élément d'affichage tactile (110) avec l'élément tactile (150) par le biais de l'utilisateur.

15. Programme comprenant un code de programme pour mettre en œuvre l'un des procédés selon la revendication 13 ou 14, si le code de programme est exécuté sur un ordinateur, un processeur ou un composant matériel programmable.
